# EUROPEAN PATENT SPECIFICATION

(11) **EP 2 394 889 B1**
(45) Date of publication and mention of the grant of the patent: **21.11.2018**
(21) Application number: 10425194.7
(22) Date of filing: 10.06.2010
(51) Int. Cl.: B62D 59/04, B60K 6/52

(54) **Vehicle trailer equipped with an additional traction system, vehicle with said trailer, and method for managing the additional traction system**
Fahrzeuganhänger mit einem zusätzlichen Traktionssystem, Fahrzeug mit dem Anhänger und Verfahren zum Verwalten des zusätzlichen Traktionssystems
Remorque de véhicule équipée d'un système de traction additionnel, véhicule doté de ladite remorque et procédé de gestion du système de traction additionnel

(43) Date of publication of application: 14.12.2011
(73) Proprietor: Iveco S.p.A., 10156 Torino (IT)
(72) Inventor: Bertozzi, Franco, 10040 Druento (IT)
(74) Representative: Franzolin, Luigi

(56) References cited:
- CA-A1- 2 588 165
- DE-A1- 10 131 935
- FR-A1- 2 854 122

## Description

### Application field of the invention

The present invention relates to the field of auxiliary traction systems for vehicles, and more in particular to a vehicle trailer equipped with an additional traction system, and a vehicle with said trailer, and a method for managing the additional traction system.

### Description of the prior art

In the scope of the present invention the term trailer refers to any kind of towed element, such as a trailer or a semitrailer provided with at least one axle with wheels equipped with tyres, towed by a motor vehicle such as an automobile, an industrial or commercial vehicle.

At present a towed element is a passive element which does not contribute to the motion changes of the towing vehicle.

Such towed element worsens the performance of the towing vehicle, the fuel consumption, the wear of the traction elements (engine and transmission) and of the braking elements (brakes, decelerators) as well as of the tyres which are forced to discharge more energy to the ground.

A solution to the above problem can be found in DE10131935. The main drawback of the traction system in DE10131935 is the fact that strategies for managing the trailer and the vehicle are not provided in complete detail, in particular
checking of the vehicle's speed and of the delivered force measured by the loading cell:
- if said speed or said delivered force is equal to zero allowing only the recharging of said group of traction batteries;
- if said speed is different than zero, and if said force is lower than zero, activating said motors to provide said traction torque;
- if said speed is different than zero, and if said force is greater than zero, activating said motors to provide said braking torque;wherein, in case of traction torque, said method comprises a control of the charging level of the batteries referred to a number of thresholds of charging percentage, in order to determine the percentage of the power supplied by the batteries with respect to the value required for generating the torque required to the motors.

### Summary of the invention

Therefore the aim of the present invention is to overcome the drawbacks mentioned above and to provide a vehicle trailer equipped with its own additional traction system which actively contributes to the motion variations of towing vehicle and towed element as a whole, so that the whole system has the same performance as the vehicle without the towed element.

The object of the present invention is the method for managing the traction and/or braking of the electric motors, according to claim 1.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 and 2 show block diagrams of two alternative embodiments of the additional traction system that is object of the present invention;
figures 3 and 4 show flowcharts of the operations performed respectively by the method for managing the traction and/or braking of the motors of the traction system, and the method for managing the energy state of the traction batteries.

In the drawings the same reference numbers and letters identify the same elements or components.

### Detailed description of preferred embodiments of the invention

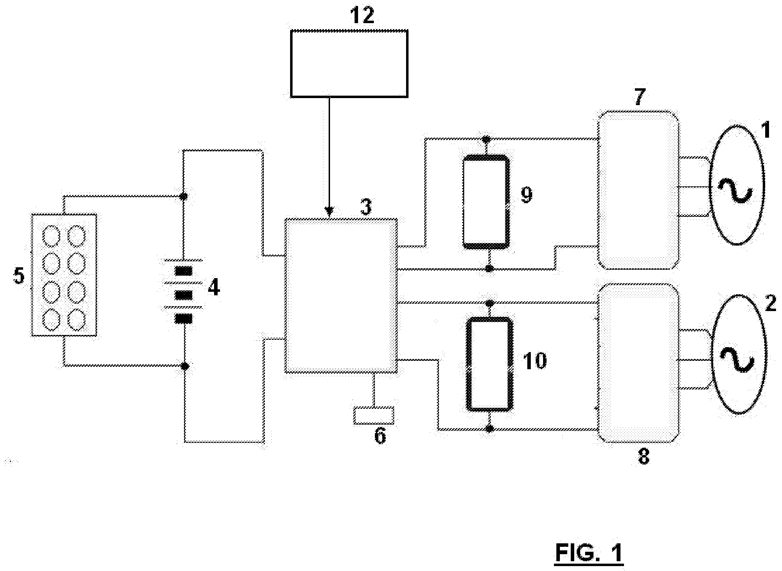

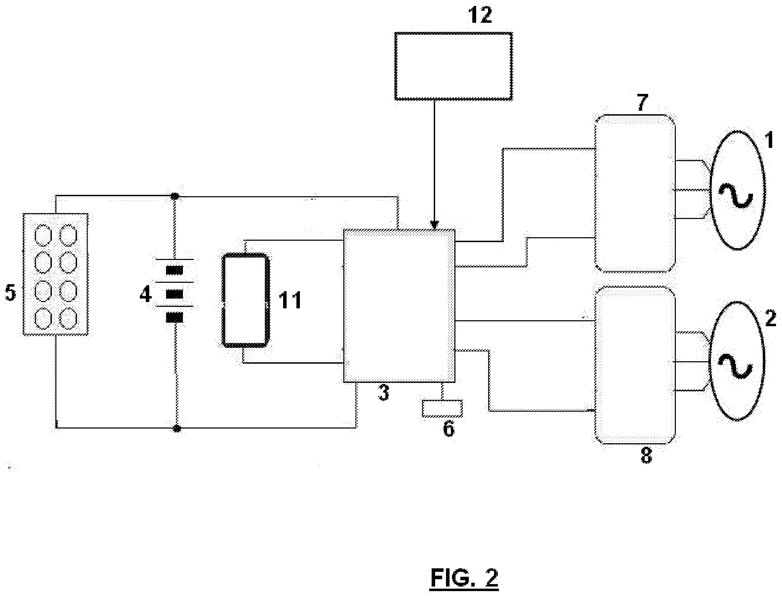

With reference to figures 1 and 2, the trailer is equipped with at least one axle whose normal wheels are replaced by the so-called "wheel motors" 1 and 2, of the type known in the art, for example of the type already available and used in a lot of electric and hybrid applications in the motor vehicle field. Usually there is a pair of wheel motors, symmetrically applied on the two sides of the axle.

In the following there is the description of an embodiment wherein one single axle is equipped with wheel motors, but it is evident that the present invention may equivalently be applied in case of a trailer equipped with two or more driving axles.

The wheel motor is formed by a wheel onto which an electric motor is keyed, the electric motor being of a three phase brushless outrunner type, characterized by a high efficiency, since it coverts the electric energy with very low losses.

The brushless outrunner electric motor (in the following called motor) is of the type with external rotor, whose larger diameter allows the development of more torque, since it is equipped with a lot of external magnets with a large number of poles. It can develop a maximum torque of even 50 kw/h, already available at very low rpm, and it may function both as a motor and as an electrical generator recovering braking energy.

The control of the engine 1 and 2 is actuated by an electronic regulator 3, which regulates rpm and torque in an independent way, substantially regulating the power supplied by a group of high-tension traction batteries 4, by means of inverters 7, 8 of the type known in the art. The group of batteries may advantageously be inserted in the trailer, but it may also be placed on the towing vehicle.

The electronic regulator 3 regulates also the charging of the group of batteries, which may advantageously be charged by means of one or more solar panels 5, for example placed on the roof of the trailer, or it may be charged by an external power supply by means of an appropriate connector 6.

The group of traction batteries 4 may for example be advantageously realized by means of the LiFeP04 technology (lithium-iron phosphate) of the type known in the art, which provides a high power density, high safety, long life, and high power capacity. Such batteries are able to supply current also with very low charging levels (even < 10%) .

Preferably one or more supercapacitors or groups of supercapacitors 9, 10, 11 are present, suitable to supply further energy to the motors with very fast charge times and higher discharge current, which is useful in pickup or acceleration.
During the passive phases or while braking they are rapidly charged, by means of the batteries 4 and/or of the motors 1 and 2 functioning as generators. During acceleration they provide electric energy to the system. The electronic regulator 3 has also the function to manage the charging and discharging of the supercapacitors.

More in particular, the alternative embodiment of figure 1 shows a group of supercapacitors connected in parallel with each motor (9, 10), while the alternative embodiment of figure 2 shows one single group of supercapacitors 11.

The solar panels 5 may be constantly connected to the batteries and contribute to their recharging both when the vehicle is stationary and when it is moving. The technology of the solar panel photovoltaic cells may be that of monocrystalline or polycrystalline silicon with a thin, light or flexible panel.

The trailer is usually connected to the towing vehicle by means of a mechanical joint in which a device of the type known called loading cell 12 is advantageously inserted, suitable to control and measure the towing or braking force exerted on the trailer by the towing vehicle, according to both the direction and the sense of the force, with a vector processing on the horizontal travelling plane.

The loading cell is used to modulate the traction or braking contribution during the phases of acceleration, constant speed, deceleration, vehicle movement on a uphill, flat or downhill ground. By means of the measurement of the force exerted on the mechanical joint, the electronic regulator 3 is able to determine the traction or braking torque required to each one or the two motors 1 and 2, in order to keep the vehicle's performance constant, as if the towed element was not present. In particular it is able to differentiate the rotation speed of the two motors so that it simulates the effect of a differential gear when cornering. In fact, the separate control of the rotation speed of each wheel, by applying the necessary torque for the different travelling conditions, allows to always have the right traction/braking torque, avoiding wheel blocking or slipping.

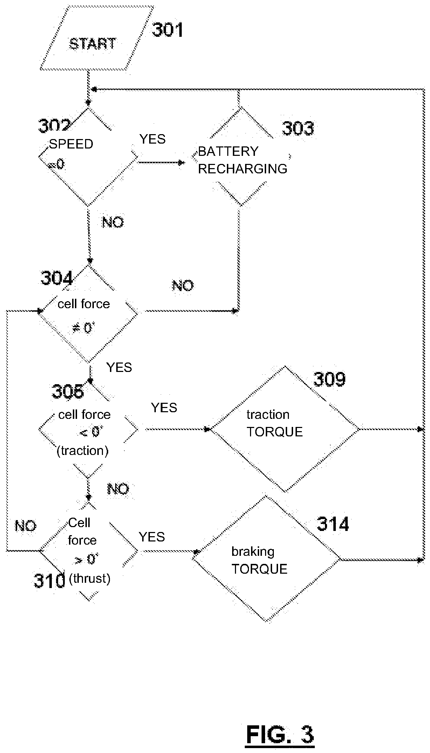

Figure 3 describes the method for managing the traction and/or braking of the motors 1 and 2 by means of the electronic regulator 3. The numbers in brackets identify the relative blocks of the flowchart in fig. 3.

At the beginning (301) the vehicle's speed is checked: if the vehicle is stationary (302, speed = 0), the only action allowed is battery recharging (303), by means of the solar panels 5, and/or the external outlet.

If the vehicle's speed is different than zero, the delivered force measured by the loading cell is checked (304): if it is equal to zero, only the battery recharging is enabled, as in the previous case (303).

If the delivered force measured by the loading cell is different than zero, than the vehicle is either towing or braking.

If the vehicle is towing (305, force delivered and measured by the cell < 0), the electronic regulator 3 determines the delivery of the traction torque (309) by the motors 1 and 2, as described in the following.

If, on the contrary, the delivered force measured by the cell is higher than zero (310), the vehicle is braking (force > 0): then the electronic regulator 3 determines the delivery of braking torque by the motors 1 and 2 (314), as described in the following.

The electronic regulator 3 calculates the traction or braking torque that has to be generated independently by each one of the motors 1 and 2, as a function of the percentage of traction or thrust force applied to the loading cell, and of the available energy from the batteries and from the supercapacitors, so that the performance of towing vehicle and towed element as a whole is potentially equivalent to, or at least approximate to, the performance of the vehicle without the towed element, so that said traction or thrust force are thus minimized.

By independently controlling the motors, it is possible to obtain also a stability control of the vehicle, as described above.

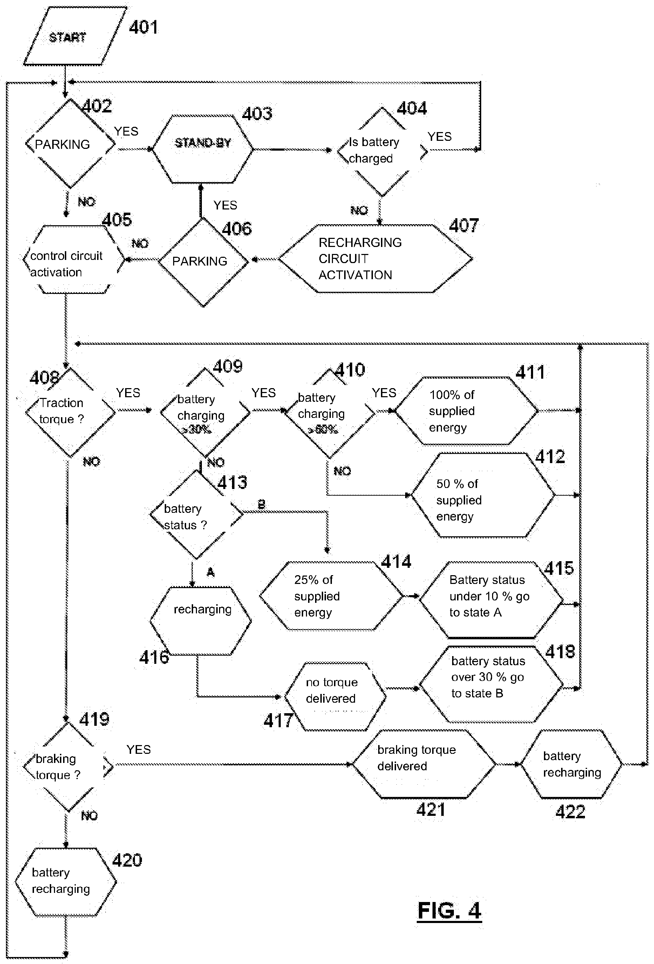

With reference to figure 4, the method for managing the energy state of the traction batteries is described, such method being actuated by means of the electronic regulator 3, which includes a circuit controlling the charging level, which uses an already available circuit measuring the charging level.

The numbers in brackets identify the relative blocks of the flowchart in fig. 4.

At the beginning (401), if the vehicle is stationary (402, parked vehicle), the circuit controlling the charging level is in standby mode (403), therefore only the charging state of the batteries is checked (404): if they are charged, no further operation is performed, otherwise the battery recharging is activated (407) by means of the external outlet 6, assuming that the solar panels 5 are always connected and able to provide charging energy.

If the vehicle is moving (406), the circuit controlling the charging level is activated (405).

If a traction condition is detected at the loading cell and a determined traction torque is required to the motors 1 and 2 (408), a procedure controlling the charging level of the batteries is actuated with reference to a number of thresholds of charging percentage, in order to determine the percentage of the power supplied by the batteries with respect to the value required for generating the torque required to the motors.

In the non limitative example described below, three percentages of battery charging level are taken as a reference, respectively high (60%), medium (30%) and low (10%) .

If the charging level is higher than 30% (409), and if it also higher than 60% (410), batteries are allowed to deliver the maximum of the available energy (411).

If the charging level is between 30% and 60% (410), batteries are allowed to deliver a percentage of the available energy, for example 50% (412).

If the charging level is lower than 30% (409), and between 30% and 10% (state B), batteries are allowed to deliver a lower percentage of the available energy, for example 25% (414).

If the charging level is lower than 10% (state A), batteries are disabled and the motors are not power supplied (417), enabling the recharging of the batteries (416). The transition between state A and B may occur (415, 418). The situation in which the motors 1 and 2 are deactivated for a long time may also occur, if the charging status of the batteries remains under 10%: in this case it may be necessary a stop of the vehicle for charging the batteries by external outlet or solar panels..

If a thrust condition is detected at the loading cell and braking torque is required to the motors 1 and 2, than the delivery of braking torque is enabled according to the request (421), and the batteries are recharged by means of the motors 1 and 2 functioning as electrical generators (422) .

If the condition is detected at the loading cell is not of thrust and no braking torque is required to the motors 1 and 2, then the control goes back to the initial condition (401).

The methods described above for managing of the traction and/or braking of the motors 1 and 2, and for managing the energy state of the traction batteries may advantageously be performed by means of a computer program, stored in said electronic regulator 3, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

The advantages deriving from the use of this invention are evident.
The main advantages of the system with respect to the conventional coupling tractor-trailer are the following:
- the use of wheel motors optimizes the ratio between performance improvement and increase of towed weight, since they are not heavy, have a high efficiency, and do not need further mechanical devices for the transmission of the motion;
- Lower fuel consumption.
- Improved performance.
- More torque and power to counter the additional weight.
- Higher stability of the system.
- Higher braking power and smaller stop distance.

From the description set forth above it will be possible for the person skilled in the art to embody the invention with no need of describing further construction details.

## Claims

1. Method for managing the traction and/or braking of the electric motors (1, 2) applied to the wheels of at least one axle of a trailer suitable for being towed by a motor vehicle in connection with the energy state of traction batteries (4) for said electric motors (1, 2), said trailer comprising:
- at least one loading cell (12) suitable for measuring the traction or thrust force exerted on the trailer;
- at least a group of traction batteries (4);
- an electronic regulator (3) able to regulate the charging and the power supply of said group of traction batteries (4) and to regulate the power supply to said motors (1, 2); said managing method comprising the following steps:
- controlling the independent activation of the motors (1, 2) providing traction torque or braking torque in order to minimize said traction or thrust force;
- controlling the management of the energy state of the batteries (4), in case of traction torque, by regulating the power supply to said motors (1, 2) from at least said batteries (4); in case of braking torque, by regulating the power supply of said braking torque and the recharging of said batteries by means of said motors,
- checking of the vehicle's speed and of the delivered force measured by the loading cell:
• if said speed or said delivered force is equal to zero allowing only the recharging of said group of traction batteries (4);
• if said speed is different than zero, and if said force is lower than zero, activating said motors (1, 2) to provide said traction torque;
• if said speed is different than zero, and if said force is greater than zero, activating said motors (1, 2) to provide said braking torque;
wherein, in case of traction torque, said method comprises a control of the charging level of the batteries referred to a number of thresholds of charging percentage, in order to determine the percentage of the power supplied by the batteries with respect to the value required for generating the torque required to the motors.

2. Method as in claim 1, wherein in case of three thresholds of charging percentage:
- if the charging level of the batteries is higher than a high threshold (60%), the percentage of energy delivered by the batteries is maximum (100%);
- if the charging level of the batteries is between a medium threshold (30%) and said high threshold (60%), the percentage of energy delivered by the batteries is a first percentage (50%) of said maximum percentage;
- if the charging level of the batteries is between said medium threshold (30%) and a low threshold (10%), the percentage of energy delivered by the batteries is a second percentage (25%) of said maximum percentage, lower than said first threshold;
- if the charging level of the batteries is lower than said low threshold (10%), no energy is delivered by the batteries.

3. Computer program comprising program code means suitable for performing the steps of any claims1 or 2, when such program is run on a computer.

4. Computer-readable means comprising a recorded program, said computer-readable means comprising program code means suitable for performing the steps according to the claims 1 or 2, when said program is run on a computer.

## Patentansprüche

1. Verfahren zur Regelung der Zugkraft und/oder des Bremsens elektrischer Motoren (1, 2), welche auf die Räder wenigstens einer Achse eines Anhängers übertragen werden, der geeignet ist, von einem Kraftwagen gezogen zu werden, in Verbindung mit dem Energiestatus der Zugkraftbatterien (4) für die elektrischen Motoren (1, 2), wobei der Anhänger folgendes umfasst:
- wenigstens eine Ladezelle (12) geeignet zur Messung der Zugkraft oder der Druckkraft, welche auf den Anhänger wirkt;
- wenigstens eine Gruppe von Zugkraftbatterien (4);
- einen elektronischen Regler (3), der in der Lage ist, das Laden und die Energieversorgung der Gruppe von Zugkraftbatterien (4) zu steuern und die Energieversorgung der Motoren (1, 2) zu regulieren;
wobei das Regelungsverfahren folgende Schritte umfasst:
- Steuerung der unabhängigen Aktivierung der Motoren (1, 2) zur Schaffung eines Zugdrehmoments oder eines Bremsdrehmoments zur Minimierung der Zug- oder Druckkraft;
- Steuerung der Verwaltung des Energiestatus der Batterien (4), für den Fall eines Zugdrehmoments durch Regulierung der Energieversorgung der Motoren (1, 2) durch wenigstens die Batterien (4); für den Fall eines Bremsdrehmoments durch Regulierung der Energieversorgung des Bremsdrehmoments und des Aufladens der Batterien mittels der Motoren,
- Überprüfung der Fahrzeuggeschwindigkeit und der bereitgestellten Kraft, die von der Ladezelle gemessen wird:
- falls die Geschwindigkeit oder die bereitgestellte Kraft gleich Null ist, wird nur das Aufladen der Gruppe der Zugkraftbatterien (4) erlaubt;
- falls die Geschwindigkeit ungleich null ist und wenn die Kraft kleiner als Null ist, Aktivierung der Motoren (1, 2) zur Schaffung des Zugdrehmoments;
- wenn die Geschwindigkeit ungleich Null ist und die Kraft größer als Null ist, Aktivierung der Motoren (1, 2) zur Bereitstellung des Bremsdrehmoments;
wobei, für den Fall des Zugdrehmoments, das Verfahren eine Steuerung des Ladeniveaus der Batterien bezogen auf eine Zahl von Grenzwerten bezüglich des Ladeprozentsatzes umfasst, um den Prozentsatz der Energie zu bestimmen, die von den Batterien hinsichtlich des benötigten Werts zur Erzeugung des nötigen Drehmoments den Motoren geliefert wird.

2. Verfahren gemäß Anspruch 1, wobei im Fall von drei Grenzwerten des Ladeprozentsatzes folgendes gilt:
- wenn das Ladelevel der Batterien höher als ein hoher Grenzwert (60%) ist, ist der Prozentsatz der Energie, welcher von den Batterien geliefert wird maximal (100%);
- wenn das Ladelevel der Batterien zwischen einem mittleren Grenzwert (30%) und dem hohen Grenzwert (60%) liegt, ist der Prozentsatz der Energie, welcher von den Batterien geliefert wird, ein erster Prozentsatz (50%) des maximalen Prozentsatzes;
- wenn das Ladelevel der Batterien zwischen dem mittleren Grenzwert (30%) und einem niedrigen Grenzwert (10%) liegt, ist der Prozentsatz der Energie, welcher von den Batterien geliefert wird, ein zweiter Prozentsatz (25%) des maximalen Prozentsatzes, der geringer ist als der erste Grenzwert;
- wenn das Ladelevel der Batterien geringer ist als der niedrige Grenzwert (10%), wird keine Energie durch die Batterien geliefert.

3. Computerprogramm, umfassend Programmcodemittel, geeignet zur Ausführung der Schritte von einem der Ansprüche 1 oder 2, wenn ein solches Programm auf einem Computer ausgeführt wird.

4. Computerlesbare Mittel, umfassend ein gespeichertes Programm, wobei die computerlesbaren Mittel Programmcodemittel umfassen, die geeignet sind zur Ausführung der Schritte gemäß einem der Ansprüche 1 oder 2, wenn das Programm auf einem Computer ausgeführt wird.

## Revendications

1. Méthode de gestion de la traction et/ou du freinage des moteurs électriques (1, 2) appliqués aux roues d'au moins un essieu d'une remorque apte à être tirée par un véhicule motorisé en relation avec l'état d'énergie de batteries de traction (4) pour lesdits moteurs électriques (1, 2), ladite remorque comprenant :
- au moins une cellule de chargement (12) apte à mesurer la force de traction ou de poussée exercée sur la remorque ;
- au moins un groupe de batteries de traction (4) ;
- un régulateur électronique (3) apte à réguler le chargement et l'alimentation électrique dudit groupe de batteries de traction (4) et à réguler l'alimentation électrique desdits moteurs (1, 2) ;
ladite méthode de gestion comprenant les étapes suivantes :
- la commande de l'activation indépendante des moteurs (1, 2) fournissant un couple de traction ou un couple de freinage afin de minimiser ladite force de traction ou de poussée ;
- la commande de la gestion de l'état d'énergie des batteries (4), en cas de couple de traction, par la régulation de l'alimentation électrique desdits moteurs (1, 2) depuis au moins lesdites batteries (4) et, en cas de couple de freinage, par la régulation de l'alimentation électrique dudit couple de freinage et le rechargement desdites batteries au moyen desdits moteurs,
- le contrôle de la vitesse du véhicule et de la force délivrée mesurée par la cellule de chargement :
• si ladite vitesse ou ladite force délivrée est égale à zéro, l'autorisation uniquement du rechargement dudit groupe de batteries de traction (4) ;
• si ladite vitesse est différente de zéro, et si ladite force est inférieure à zéro, l'activation desdits moteurs (1, 2) pour fournir ledit couple de traction ;
• si ladite vitesse est différente de zéro, et si ladite force est supérieure à zéro, l'activation desdits moteurs (1, 2) pour fournir ledit couple de freinage ;
dans laquelle, en cas de couple de traction, ladite méthode comprend une commande du niveau de chargement des batteries en rapport avec un nombre de seuils de pourcentage de chargement, afin de déterminer le pourcentage de l'alimentation électrique fournie par les batteries par rapport à la valeur nécessaire pour générer le couple nécessaire aux moteurs.

2. Méthode selon la revendication 1, dans laquelle, en cas de trois seuils de pourcentage de chargement :
- si le niveau de chargement des batteries est supérieur à un seuil haut (60 %), le pourcentage d'énergie délivrée par les batteries est maximal (100 %) ;
- si le niveau de chargement des batteries est entre un seuil moyen (30 %) et ledit seuil haut (60 %), le pourcentage d'énergie délivrée par les batteries est un premier pourcentage (50 %) dudit pourcentage maximal ;
- si le niveau de chargement des batteries est entre ledit seuil moyen (30 %) et un seuil bas (10 %) , le pourcentage d'énergie délivrée par les batteries est un deuxième pourcentage (25 %) dudit pourcentage maximal, inférieur audit premier seuil ;
- si le niveau de chargement des batteries est inférieur audit seuil bas (10 %), aucune énergie n'est délivrée par les batteries.

3. Programme informatique comprenant des moyens de code de programme aptes à effectuer les étapes selon la revendication 1 ou 2, lorsque ledit programme est exécuté sur un ordinateur.

4. Moyens lisibles par ordinateur comprenant un programme enregistré, lesdits moyens lisibles par ordinateur comprenant des moyens de code de programme aptes à effectuer les étapes selon la revendication 1 ou 2, lorsque ledit programme est exécuté sur un ordinateur.
